# EUROPEAN PATENT SPECIFICATION

(11) **EP 1 556 252 B1**
(45) Date of publication and mention of the grant of the patent: **06.02.2008**
(21) Application number: 03751675.4
(22) Date of filing: 19.09.2003
(51) Int. Cl.: B60R 9/045

(54) **SECURING DEVICE**
BEFESTIGUNGSVORRICHTUNG
DISPOSITIF DE FIXATION

(30) Priority: 09.10.2002 SE 0202969
(43) Date of publication of application: 27.07.2005
(73) Proprietor: Thule Sweden AB, 330 33 Hillerstorp (SE)
(72) Inventor: NÄSLUND, Henrik, S-553 36 Jönköping (SE); ARVIDSSON, Andreas, S-331 31 Värnamo (SE); NILSSON, Anders, S-331 31 Värnamo (SE)
(86) International application number: PCT/SE2003/001468
(87) International publication number: WO 2004/033258

(56) References cited:
- EP-A2- 1 260 430
- US-A1- 2002 125 282
- US-B1- 6 422 441

## Description

### Technical field

The present invention relates to a securing device according to claim 1.

### State of the art

Securing devices of the type described are already known and are available in various designs. A securing device comprising the features of the preamble of claim 1 is known from EP 1 260 430 A2. However, the disadvantage of these existing designs is that, in order to ensure tight and secure attachment of the securing device to the load carrier bar, the clamping yoke must be designed to fit the load carrier bar. This means that a number of different securing devices must be available since load carrier bars of various designs are available on the market. This creates the risk that a load carrier may be attached to a load carrier bar using a securing device which is not designed for the particular load carrier bar, which may easily occur if a load carrier is lent and which, in the worst case, may cause the load carrier to loosen from the load carrier bars.

### Problem

Thus, there exists a need for a securing device of the type described in the introduction, which is designed in such manner that it can safely be attached to a load carrier bar regardless of the design of the load carrier bar.

### Solution

The present invention overcomes the problem described above by means of a securing device of the type described in the introduction, which is characterised in that said flat face allows for relative displacement between the base part and the load carrier bar when the clamping yoke is tightened.

The present invention is also characterised in that the contact area is of circular shape

The present invention is further characterised in that the contact area is of pointed arch shape.

The present invention is yet further characterised in that the contact area of the clamping yoke begins and ends at points which, when the clamping yoke is tightened about the load carrier bar, are located respectively between the base part and the tangent to the point on the load carrier bar which is furthest from the base part.

### Description of figures

The invention will hereinafter be described with reference to the appended figures, of which:
Fig. 1 is a general view showing a load carrier attached to load carrier bars mounted on a vehicle roof;
Fig. 2 is a general view showing a load carrier attached to load carrier bars and seen obliquely from above;
Fig. 3 is a detail view of a securing device in accordance with the present invention, in a fully open position;
Fig. 4 is a view corresponding to Fig. 3 in which the clamping yoke is connected to the tightening device;
Fig. 5 is a view corresponding to Fig. 3 in which the tightening device has tightened the clamping yoke into partial contact with the load carrier bar;
Fig. 6 is a view in which the tightening device is in the fully tightened position;
Figs. 7-8 are views showing alternative load carrier bar profiles;
Figs. 9-11 are views showing alternative clamping yoke shapes covered by the invention.

### Preferred embodiment

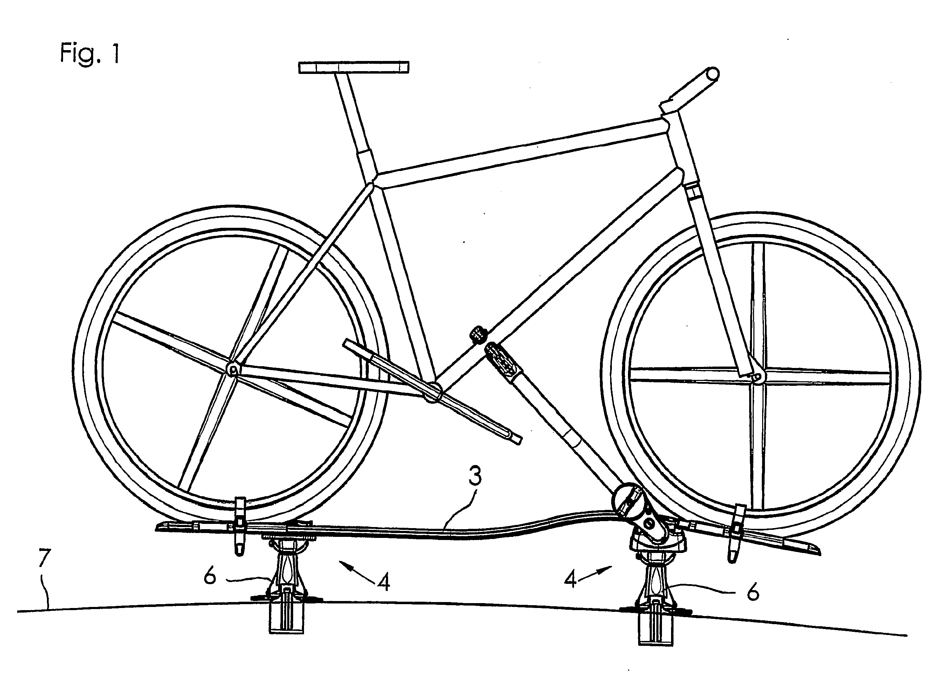

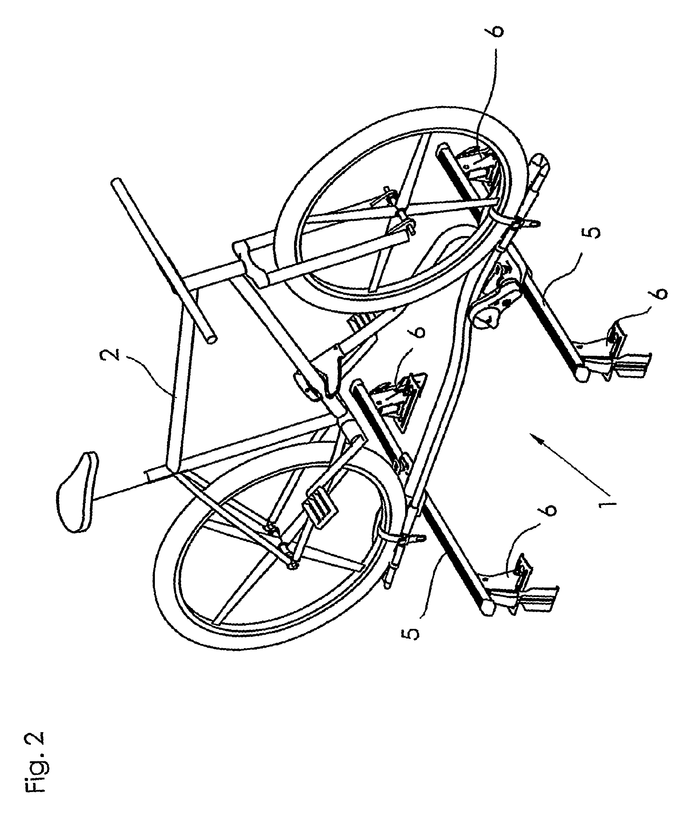

Figs. 1 and 2 show a load carrier 1 on which a bicycle 2 is loaded. The load carrier 1 is provided with a rail 3 to which securing devices 4 for attaching the load carrier 1 to load carrier bars 5 are connected in a known manner. As shown schematically in Fig.1, the load carrier bars 5 are mounted on a vehicle roof 7 by means of mounting devices 6.

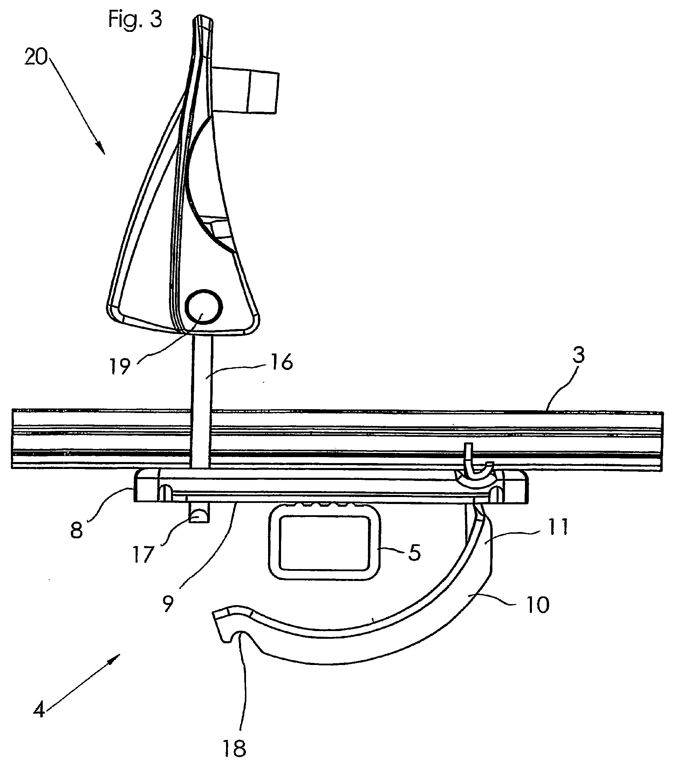

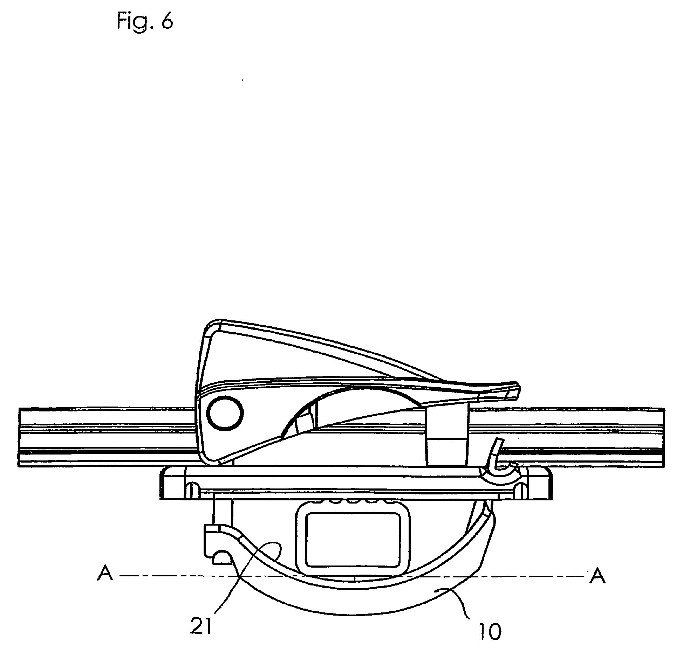

The securing device in accordance with the present invention is shown in detail in Figs. 3-6. The figures also show part of the rail 3, which is attached to the securing device in a manner known to one skilled in the art, but which will not be described in detail hereinafter since it is not of significance to the invention. The securing device is provided with a base part 8 with an essentially flat surface 9, which is placed on a load carrier bar 5. Although the load carrier bar shown in the figures is of rectangular cross-section, the invention is independent of the cross-section of the load carrier bar. The base part 8 is provided with a clamping yoke 10. At one end 11, the clamping yoke is pivotably connected to the base part 8 by means of a pivot arrangement 12 consisting of a pivot pin 13, which consists of a section of the clamping yoke 10 formed into a U shape and which rests in a cradle 14 formed in the base part 8. At a second end, the clamping yoke 10 is attached to the base part by means of a tightening device 15, which consists of a pull rod 16 with a hook-shaped end 17 which engages in a shaped recess 18 in the clamping yoke 10. At the end 19 opposite to the hook-shaped end, the pull rod 16 is attached pivotably to the a lever arrangement 20 which enables the pull rod to be moved, in a known manner, in a direction toward and away from the base part 8, causing the clamping yoke 10, when engaged with the pull rod, to be tightened about the load carrier bar 5 in a manner which will be described below. The clamping yoke 10 is provided with a contact area 21, which is of arched shape and along which contact between the load carrier bar and clamping yoke will occur when the clamping yoke is tightened against the base part. The dash-dotted line A-A in Fig. 6 indicates the tangent to the point on the load carrier bar 5 which is situated furthest from the base part and, as can be seen, the contact area of the clamping yoke begins and ends at points located between the base part and the tangent A-A when the clamping yoke is tightened against the base part 8 (see Fig. 6).

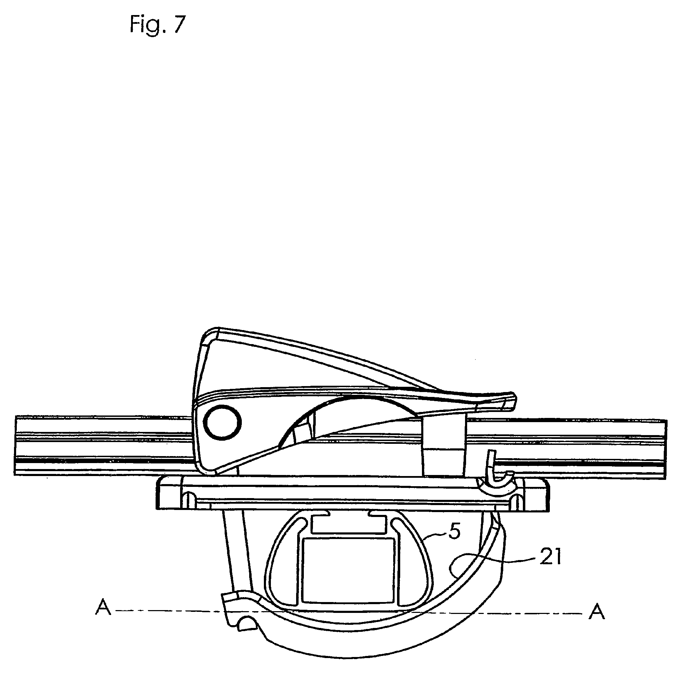

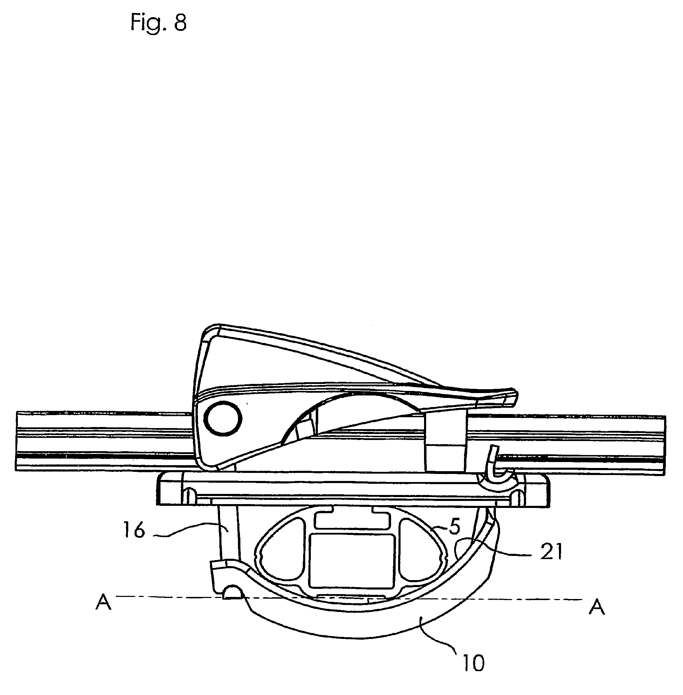

Alternative versions of the load carrier bar 5 are shown in Figs. 7 and 8, in which the clamping yoke is seen in the tightened position corresponding to that shown in Fig. 6 and, as can be seen in this case also, the contact area 21 of the clamping yoke begins and ends at points located between the tangent A-A and the base part 8.

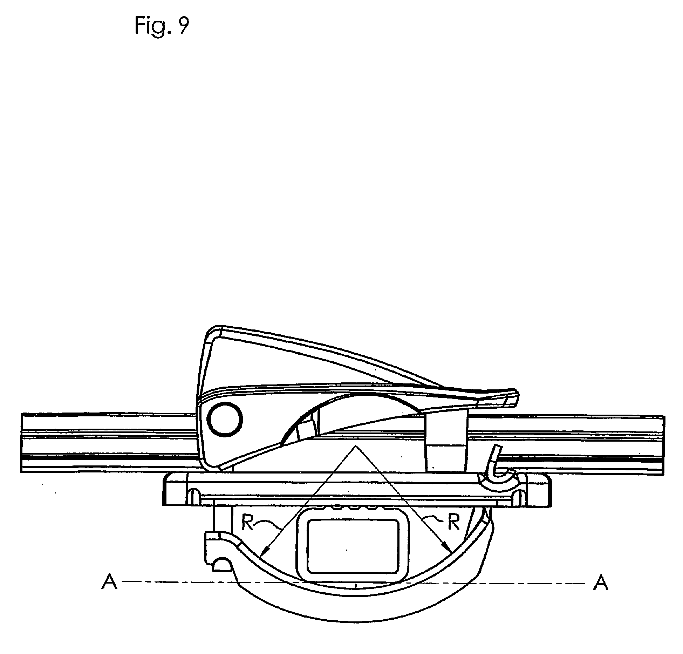

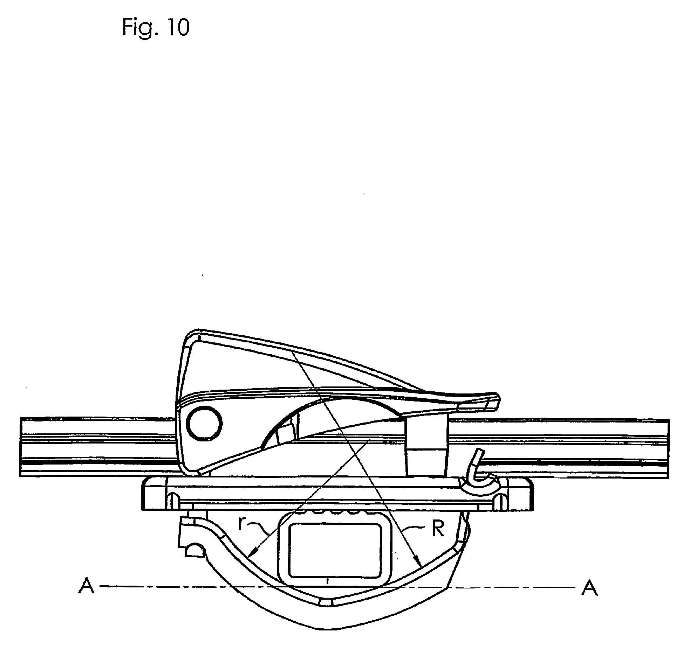

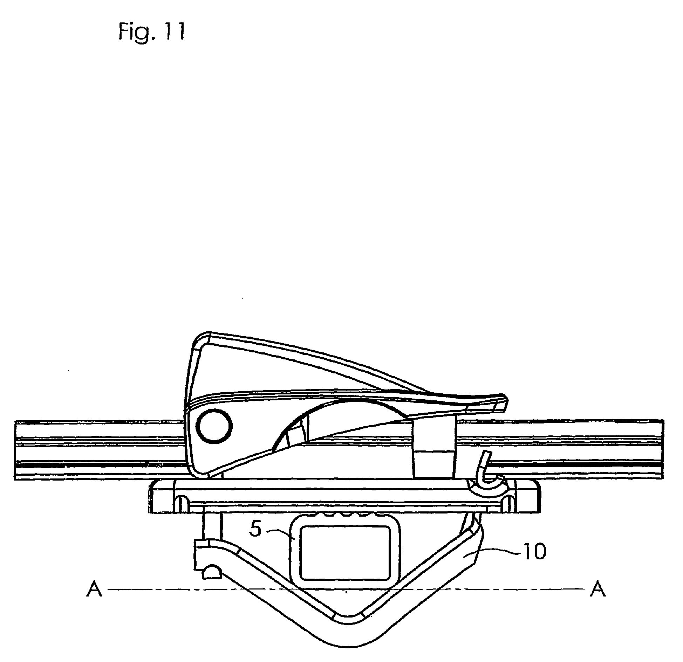

Figs. 9-10 show different versions of the clamping yoke 10. In Fig. 9, the contact area on the clamping yoke is circular in shape. In Fig. 10, the contact area on the left of the figure is of smaller radius than the area on the right of the figure, as indicated by the radii 'R' and 'r' respectively, and the contact area is, therefore, bow-shaped, whereas in Fig. 11, the contact area is pointed arch-shaped. As can be seen clearly from the figures, the different versions shown are also provided with contact areas which begin and end at points located between the base part 8 and the tangent A-A.

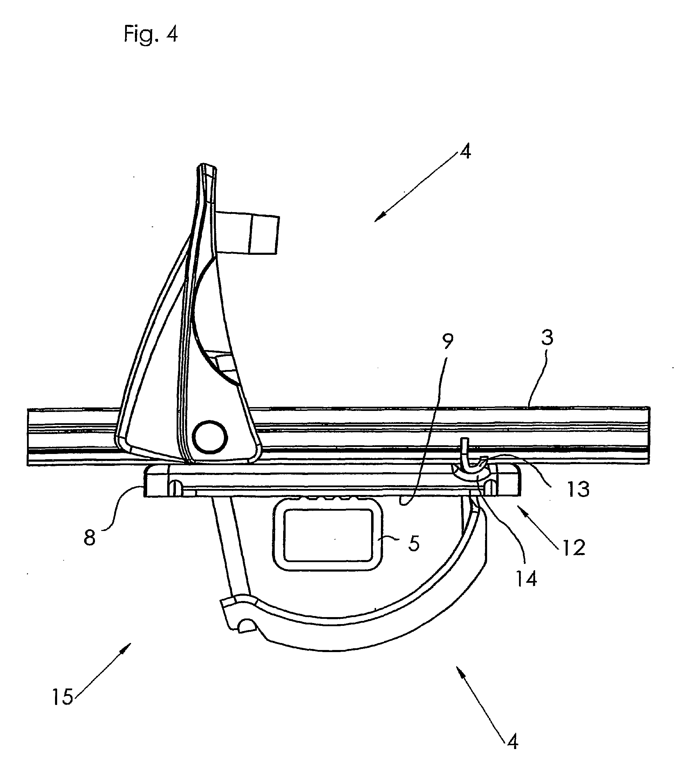

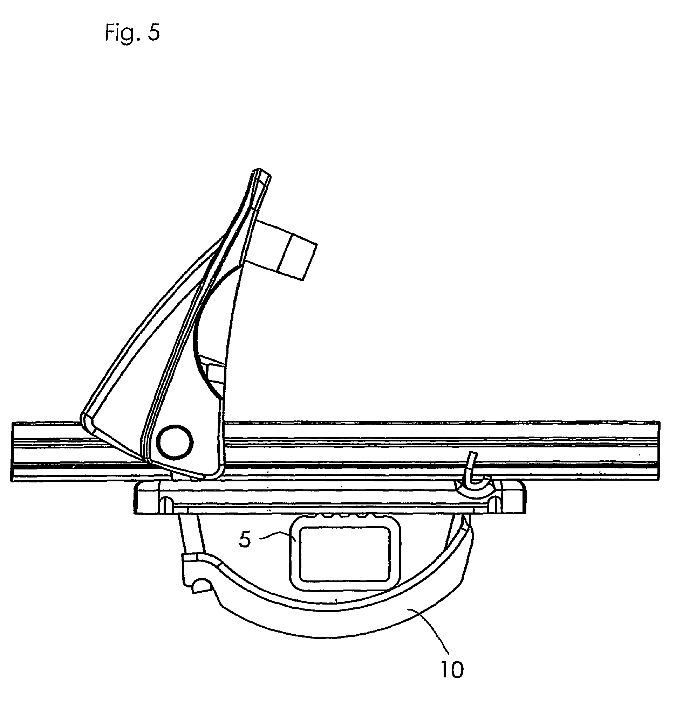

The operation of the securing device will hereinafter be described with reference to Figs. 1-6. To mount a load carrier 1 on the load carrier bars 5, the load carrier is lifted onto the load carrier bars and the base parts of the respective securing devices are placed on the load carrier bars. At this point, the clamping yoke 10 is disengaged from the pull rod 16 in the manner illustrated in Fig. 3. The clamping yoke 10 is then connected to the pull rod 16, see Fig. 4, causing the lever arrangement 20 to pivot in the manner shown in Figs. 5 and 6, and the clamping yoke 10 to turn about the pivot point 12 and move into contact with the base part 8. As shown in Fig. 5, the clamping yoke first comes in contact with the side of the load carrier bar located closest to the pivot point 12 and it will be clear to one skilled in the art that in order for the clamping yoke to be tightened to the position shown in Fig. 6, relative displacement must occur between the base part and the load carrier bar in such manner that the load carrier bar moves to the left in Fig. 5 relative to the base part 8, which may be achieved either by moving the entire load carrier or moving the base part along the rail 3. When the clamping yoke has been tightened to the position shown in Fig. 6, the arrangement will be clamped securely to the load carrier bar, regardless of the shape of the load carrier bar. As illustrated in the figures, the contact areas of the various clamping yokes are designed to extend along the entire length of the clamping yoke. However, as explained above, it is sufficient for the contact area to begin and end at points located respectively between the base part and the tangent to the point on the load carrier bar situated furthest from the base part.

## Claims

1. Securing device (4), which is used between a load carrier (1) and a load carrier bar (5) mounted on the roof (7) of a vehicle, by means of mounting devices (6), said securing device comprising a base part (8) having a face (9) designed for placement on the load carrier bar, and a clamping yoke (10) that encloses the load carrier bar and which, at a first end (11) is pivotably engaged with the base part by means of a pivot arrangement (12) and, at a second end, is attached to the base part by means of a tightening device (15) for the purpose of tightening the clamping yoke about the load carrier bar, said clamping yoke (10) being provided with a bow-shaped contact area (21) for engagement with the load carrier bar (5), **CHARACTERISED IN THAT** said base part (8) is having a flat face (9) that allows for relative displacement between the base part (8) and the load carrier bar (5) when the clamping yoke (10) is tightened.

2. Securing device in accordance with claim 1 **CHARACTERISED IN THAT** the contact area (21) is circular in shape.

3. Securing device in accordance with claim 1 **CHARACTERISED IN THAT** the contact area (21) is pointed arch-shaped.

4. Securing device in accordance with any of the foregoing claims **CHARACTERISED IN THAT** the contact area (21) begins and ends at points which, when the clamping yoke (10) is tightened about the load carrier bar, are located respectively between the base part (8) and the tangent (A-A) to the point on the load carrier bar (5) situated furthest from the base part (8).

## Patentansprüche

1. Befestigungsvorrichtung (4), die zwischen einem Lastträger (1) und einer auf dem Dach (7) eines Fahrzeugs mittels Fixiervorrichtungen (6) angebrachten Lastträgerstange (5) verwendet wird, wobei die Befestigungsvorrichtung ein Basisteil (8), das eine Fläche (9) aufweist, die zur Platzierung auf der Lastträgerstange ausgestaltet ist, und einen Klemmbügel (10) umfasst, der die Lastträgerstange umschließt und der an einem ersten Ende (11) in schwenkbarem Eingriff mit dem Basisteil mittels einer Schwenkanordnung (12) und an einem zweiten Ende an dem Basisteil mittels einer Vorrichtung zum Straffen (15) angebracht ist, um den Klemmbügel um die Lastträgerstange zu straffen, wobei der Klemmbügel (10) mit einem bogenförmigen Kontaktbereich (21) zum Eingriff mit der Lastträgerstange (5) versehen ist, **dadurch gekennzeichnet, dass** das Basisteil (8) eine flache Fläche (9) aufweist, die eine Relativverschiebung zwischen dem Basisteil (8) und der Lastträgerstange (5) erlaubt, wenn der Klemmbügel (10) gestrafft ist.

2. Befestigungsvorrichtung gemäß Anspruch 1, **dadurch gekennzeichnet, dass** der Kontaktbereich (21) kreisförmig ist.

3. Befestigungsvorrichtung gemäß Anspruch 1, **dadurch gekennzeichnet, dass** der Kontaktbereich (21) spitzbogenförmig ist.

4. Befestigungsvorrichtung gemäß einem der vorhergehenden Ansprüche, **dadurch gekennzeichnet, dass** der Kontaktbereich (21) an Punkten beginnt und endet, die, wenn der Klemmbügel (10) um die Lastträgerstange gestrafft ist, jeweils zwischen dem Basisteil (8) und der Tangente (A-A) an dem Punkt der Lastträgerstange (5) anliegt, der am weitesten von dem Basisteil (8) entfernt ist.

## Revendications

1. Dispositif de fixation (4), qui est utilisé entre un porte-charge (1) et une barre de porte-charge (5) montée sur le toit (7) d'un véhicule au moyen de dispositifs de montage (6), le dit dispositif de fixation comprenant une partie de base (8) ayant une face (9) prévue pour mise en place sur la barre de porte-charge, et un étrier de blocage (10) qui entoure la barre de porte-charge et qui est monté de façon pivotante, à une première extrémité (11), sur la partie de base au moyen d'un système de pivot (12) et est attaché, à une deuxième extrémité, à la partie de base au moyen d'un dispositif de serrage (15) dans le but de serrer l'étrier de blocage autour de la barre de porte-charge, le dit étrier de blocage (10) comportant une région de contact en forme d'arc (21) pour venir en prise avec la barre de porte-charge (5),
**caractérisé en ce que** la dite partie de base (8) présente une face plane (9) qui permet un déplacement relatif entre la partie de base (8) et la barre de porte-charge (5) lorsque l'étrier de blocage (10) est serré.

2. Dispositif de fixation selon la revendication 1, **caractérisé en ce que** la région de contact (21) est de forme circulaire.

3. Dispositif de fixation selon la revendication 1, **caractérisé en ce que** la région de contact (21) est en forme d'arche pointue.

4. Dispositif de fixation selon une quelconque des revendications précédentes, **caractérisé en ce que** la région de contact (21) commence et finit à des points qui sont situés, lorsque l'étrier de blocage (10) est serré autour de la barre de porte-charge, respectivement entre la partie de base (8) et la tangente (A-A) au point sur la barre de porte-charge (5) qui est situé le plus loin de la partie de base (8).
